# EUROPEAN PATENT APPLICATION

(11) **EP 2 602 689 A2**
(43) Date of publication of application: **12.06.2013**
(21) Application number: 12193556.3
(22) Date of filing: 21.11.2012
(51) Int. Cl.: G06F 1/18

(54) **Device for enabling attaching and detaching of a recording medium**

(30) Priority: 09.12.2011 KR 20110131760
(71) Applicant: Humax Co., Ltd., Gyeonggi-do 463-050 (KR)
(72) Inventor: Kim, Donghyun, 463-811 Gyeonggi-do (KR)
(74) Representative: Vossius & Partner

(57) **Abstract**

The device for enabling attaching and detaching of a recording medium according to the present invention comprises: a recording medium housing unit for safely housing a recording medium, and a translating unit for guiding the recording medium housing unit while the recording medium housing unit is inserted into or discharged out of the body of the device, wherein one or more of tongs are installed on the front of the recording medium housing unit and a locking means is formed on some portion of one of the tongs for coupling with or separating from the body of the device. Two tongs can be arranged in parallel on the front end of the recording medium housing unit, and a locking means can be formed on one of the two tongs to be coupled with or separated from a lock step formed on the front of the body. Therefore, the disk drive can be maintained in the securely coupled state, and the user can easily discharge the disk drive from the body of the device.

## Description

The present invention relates to a device for enabling attaching and detaching of a disk drive such as a hard disk drive.

Recently, various types of devices to which recording media such as a hard disk can be attached and detached are widely used. For example, a set-top box (STB) having the function of Personal Video Record (PVR) can record broadcast programs on the media such as a hard disk drive that can be attached inside the body of the device.

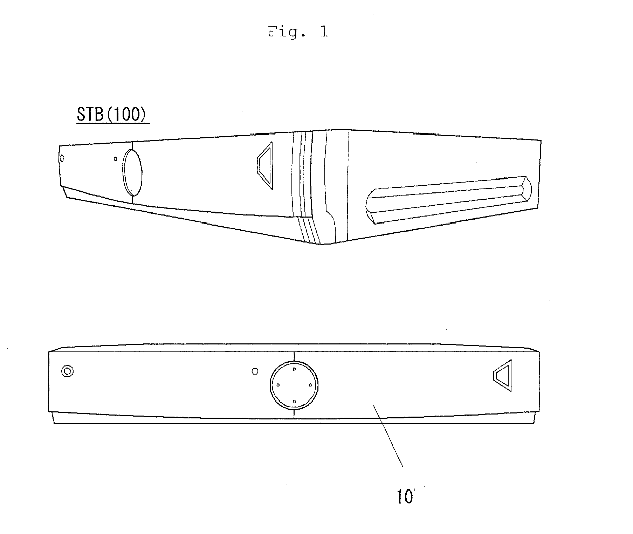

As illustrated in Fig. 1, a front door 10 is installed at the front of the set-top box 100 having PVR function, and a user can insert or discharge a HDD Bracket 12 in the shape of tray, which houses a hard disk drive 11, by rotating the front door 10 to open.

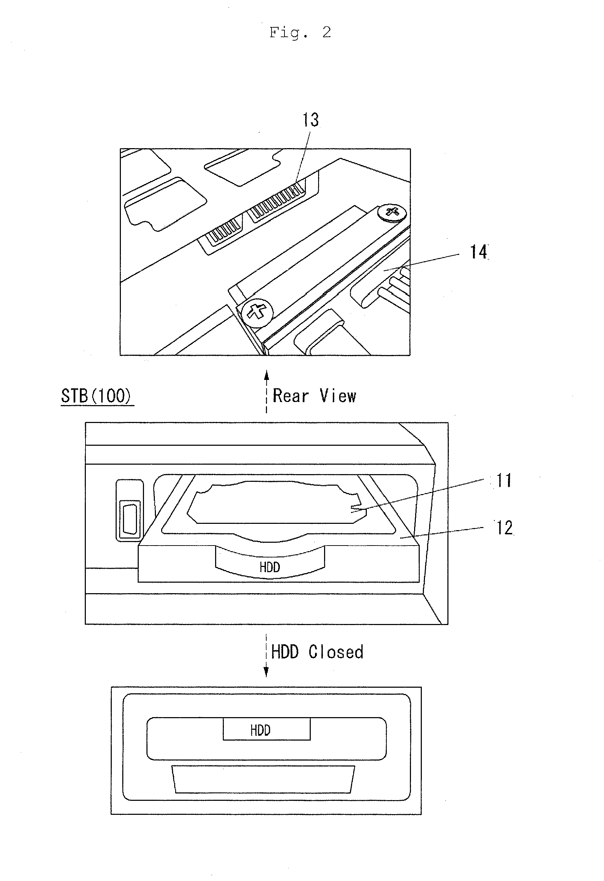

As illustrated in Fig. 2, the connector 13 installed at the rear surface of the hard disk drive 11 is electrically connected to the connector 14 at the rear surface of the body of the device and the two connectors are in physically coupled state.

However, since additional fastening means is not provided to securely maintain the coupled state, the hard disk drive bracket can be protruded out of the body against the intention of the user, thereby causing fatal errors such as physical damage to the hard disk or loss of data recorded on the hard disk, which urgently requires an effective solution for solving this problem.

Accordingly, the objective of the present invention is to provide a device that can maintain the recording medium such as hard disk inserted into the device firmly coupled with the body of the device while using and enables users to easily discharge the medium from the device, which can be used in various devices such as a set-top box (STB) using removable recording medium.

The device for enabling attaching and detaching of a recording medium according to the present invention comprises: a recording medium housing unit for safely housing a recording medium, and a translating unit for guiding the recording medium housing unit while the recording medium housing unit is inserted into or discharged out of the body of the device, wherein one or more of tongs are installed on the front of the recording medium housing unit and a locking means is formed on a portion of one of the tongs for coupling with or separating from the body of the device.

According to one embodiment of the present invention, the recording medium housing unit is in the shape of tray and two or more of tongs are arranged in parallel on the recording medium housing unit with a uniform interval.

According to another embodiment of the present invention, the recording medium can be a hard disk or a solid state disk, the recording medium housing unit can be a disk bracket, and the translating unit can be a cover bracket where the disk bracket is inserted into or discharged out of the cover bracket.

According to yet another embodiment of the present invention, two tongs can be arranged in parallel on the front end of the recording medium housing unit.

According to yet another embodiment of the present invention, the locking means is formed on one of the two tongs to be coupled with or separated from a lock step formed on the front of the body of the device.

According to yet another embodiment of the present invention, the locking means can be formed on the lower portion of the tong in the shape of a hook.

According to yet another embodiment of the present invention, the locking means has a vertical cross sectional surface to the direction of the front of the drive bracket and a tilted surface to the rear direction so that the vertical cross sectional surface of the locking means is coupled with the lock step securing the recording medium housing unit when the recording medium housing unit is inserted into the body.

According to yet another embodiment of the present invention, the tong with a locking means formed on it is fixed on the floor of the recording medium housing unit and the other tong is fixed on the front of the recording medium housing unit, with the length of protrusion of the tong having a locking means longer than the length of protrusion of the other tong.

According to yet another embodiment of the present invention, a groove in the shape of a cylinder cut halfway in the direction of the axis can be formed at the portion located inner than the locking means and under the tong, and a protruding part is formed with the shape and location matching the shape and location of the groove at the time the locking means and lock step formed on the body are coupled.

According to yet another embodiment of the present invention, the locking means can be configured to be coupled with the lock step formed on the body when a user pushes and inserts the recording medium housing unit, and the locking means can be separated from the lock step formed on the body when a user lifts up the tong or grips the tongs together.

According to yet another embodiment of the present invention, guide bosses can be formed on the right and left sides of the recording medium housing unit and guide rails can be formed on the right and left inner sides of the translating unit.

According to yet another embodiment of the present invention, the recording medium housing unit can be configured to be inserted into or discharged out of the translating unit through sliding by the guide bosses and guide rails.

By using the device of the present invention, the recording medium such as a hard disk drive can maintain securely coupled state and users can easily discharge the medium from the device.

Fig. 1 illustrates an example of conventional set-top box;

Fig. 2 illustrates an example of the state where a hard disk is attached to or detached from the conventional set-top box;

Figs. 3 and 4 illustrate the construction of the device that enables attaching and detaching of a recording medium according to one embodiment of the present invention;

Fig. 5 illustrates the structure of a hard disk bracket according to one embodiment of the present invention;

Fig. 6 is a cross-sectional view of illustrating the state where the hard disk drive is coupled according to one embodiment of the present invention;

Fig. 7 illustrates the process of attaching a hard disk to the device according to one embodiment of the present invention; and

Fig. 8 illustrates the process of detaching a hard disk from the device according to one embodiment of the present invention.

Preferred embodiments of the device for enabling attaching and detaching of a recording medium according to the present invention will be described below in more detail with reference to the drawings attached.

First, the device of the device according to the present invention, which enables attaching and detaching of a recording medium, or a disk drive, can be applied to various types of devices such as set-top box (STB) equipped with the function of PVR which enables recording of contents on a disk drive such as a hard disk drive or solid state drive.

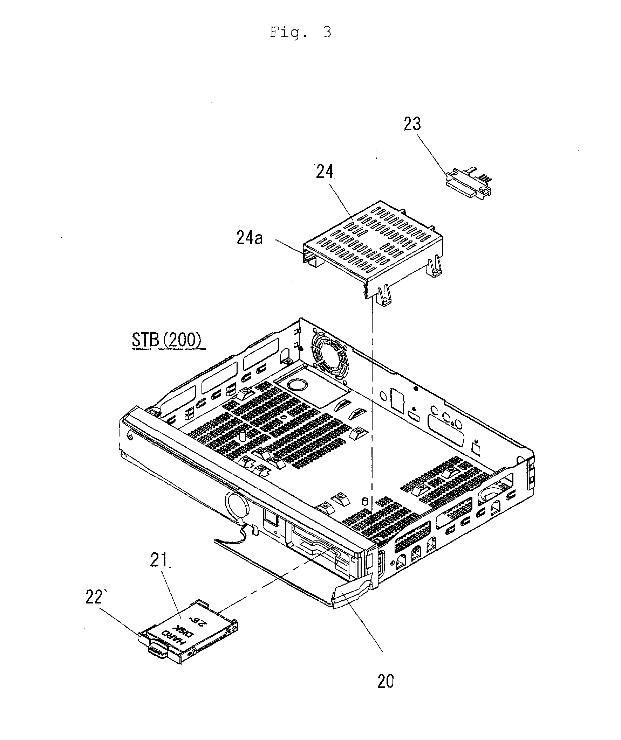

For example, as illustrated in Fig. 3, the set-top box 200, to which the device according to the present invention is applied, includes a front door 20 installed on the front surface of the body, and a recording medium housing unit (or disk drive housing unit) such as hard disk drive bracket 22 in the form of tray, in which hard disk drive 21 can be safely housed, inserted into the body or discharged out of the body when the front door 20 is opened.

And, as illustrated in Fig. 3, a translating unit is installed inside the body for introducing or exiting the hard disk bracket 22 through sliding, and a cover bracket 24 can be installed as one example of the translating unit with guide rails 24a formed on left and right inner sides of the cover bracket 24.

Also, on the rear surface of the cover bracket 24, a connector 23 is installed for physically coupling with the connector at the rear surface of the hard disk drive 21.

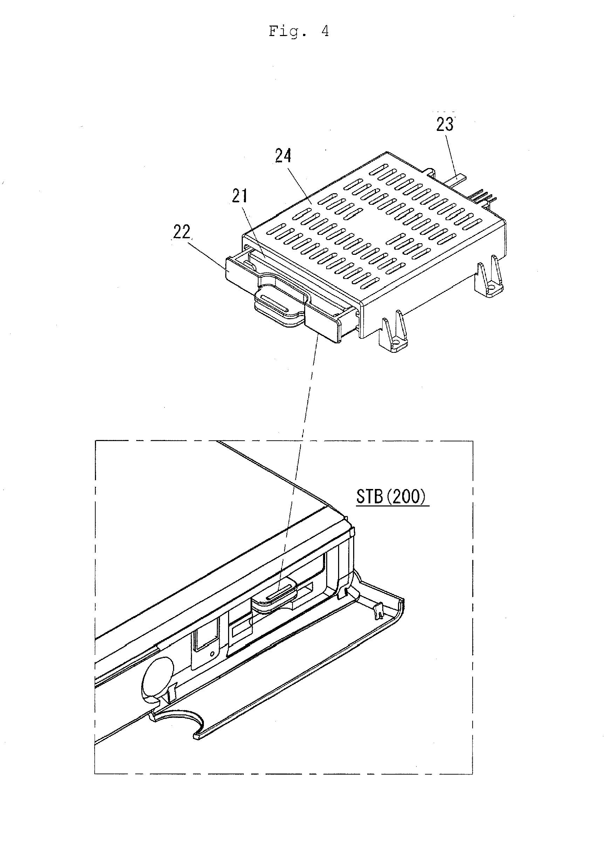

In other words, as illustrated in Fig. 4, if a user inserts the hard disk bracket 22 into the body when the front door 20 installed on the front surface of the body is opened, the hard disk bracket 22 is inserted into the body sliding along the guide rails 24a formed on the left and right inner sides of the cover bracket 24, thereby making the connector of the hard disk drive 21 and the connector 23 of the body electrically and physically coupled each other.

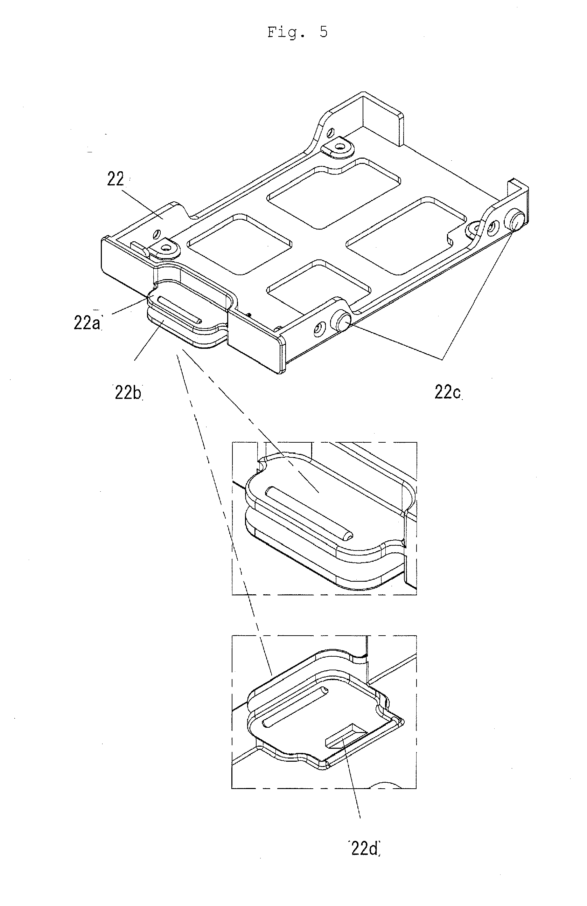

On the hard disk bracket 22, as described in Fig. 5, a first tong (tongue) (Tong 1) 22a and a second tong (tongue) (Tong 2) 22b are arranged in parallel with uniform intervals (for example, 2-3mm) protruding in the direction of front surface, the first tong 22a being fixed on the front surface of the hard disk bracket 22 and the second tong 22b being fixed on the floor of the hard disk bracket 22, and a lock boss 22d in the shape of a hook is formed on the lower part of the second tong 22b.

Also, since guide bosses 22c are formed on the right and left outer sides of the hard disk bracket 22, the hard disk bracket is inserted into or discharged out of the cover bracket sliding along the guide rail 24a formed on the cover bracket 24.

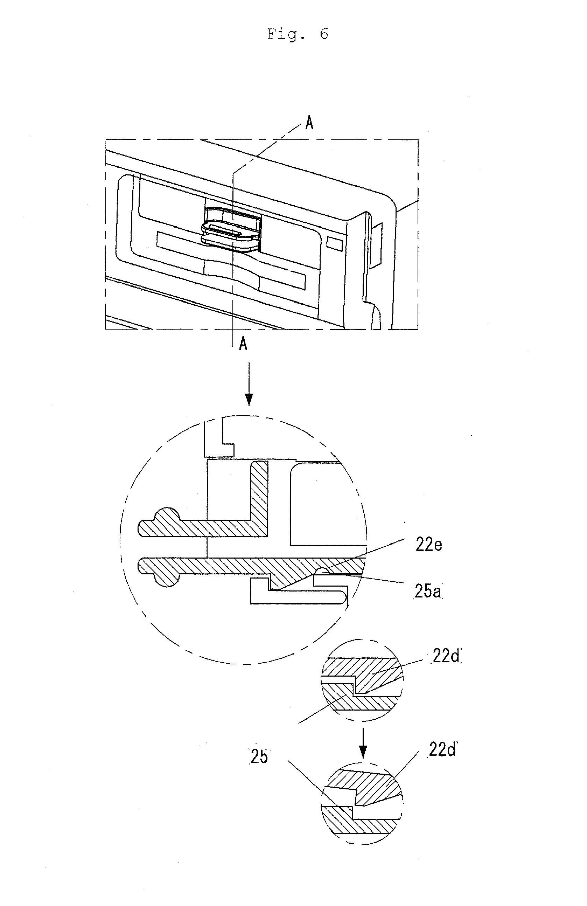

As illustrated in Fig. 6, a lock boss 22d is formed on the lower portion of the second tong 22b as a locking means in the shape of such as a hook and, as the hard disk bracket 22 is inserted into the body, coupled with the lock step 25 formed at the front of the body with vertical cross section, thereby enabling the hard disk to be maintained at the state of firm coupling.

When the user lifts up the second tong 22b of the hard disk bracket or grips both the first tong 22a and the second tong 22b together in order to separate the hard disk drive, as illustrated in Fig. 6, the lock boss 22d formed on the lower portion of the second tong 22b is readily separated from the lock step 25 formed on the front of the body, thereby enabling separation of the hard disk from the body.

The second tong 22b is fixed on the floor of the hard disk bracket 22 at the location which is behind the location where the first tong 22a is fixed on the front of the hard disk bracket 22, which means that the length of protrusion of the second tong 22b from the floor of the hard disk bracket 22 is longer than the length of protrusion of the first tong 22a from the front of the hard disk bracket 22.

Therefore, when the user grips both the first tong 22a and the second tong 22b with one hand, i.e., when same amount of forces are applied to the first tong 22a and the second tong 22b, the second tong 22b with longer protrusion can rotate around the fixed location while the first tong 22a with shorter protrusion barely moves. By this rotation, the lock boss 22d formed on the lower portion of the second tong 22b and the lock step 25 formed on the front of the body can be coupled or separated.

Vertical cross sectional surface is formed on the front of the lock boss 22b, and tilted surface is formed in the rear so that, as the hard disk bracket 22 is inserted into the body, the second tong 22b rotates clockwise during the tilted surface of the lock boss 22b passes across the lock step 25 sliding on the upper surface of the lock step 25, thereby reducing the force required to push the hard disk bracket 22 into the body of the device. After the tilted surface of the lock boss 22b passes through the upper surface of the lock step 25, the second tong 22b rotates again counterclockwise and the vertical cross sectional surface of the lock boss 22b is clinched with the lock step 25, thereby preventing the hard disk bracket 22 from being separated out of the device.

Also, a groove 22e in the shape of semicircle, or more precisely, in the shape of a cylinder cut halfway in the direction of the axis, can be formed at the portion of the floor of the hard disk bracket 22 from which the second tong 22b protrudes, i.e., on the portion located inner to the lock boss 22b and under the second tong 22b, so that the second tong 22b can rotate more easily when the hard disk bracket 22 is inserted into the body or separated from the body.

Also, a protruding part 25a can be formed with the shape and location matching the shape and location of the groove 22e at the time the hard disk bracket 22 is inserted into the body coupling the vertical cross section of the lock boss 22b and the lock step 25 together, so that the second tong 22b can be more easily rotated around the groove 22e and the protruding part 25a, and also the hard disk drive can be in the state coupled more firmly with the body.

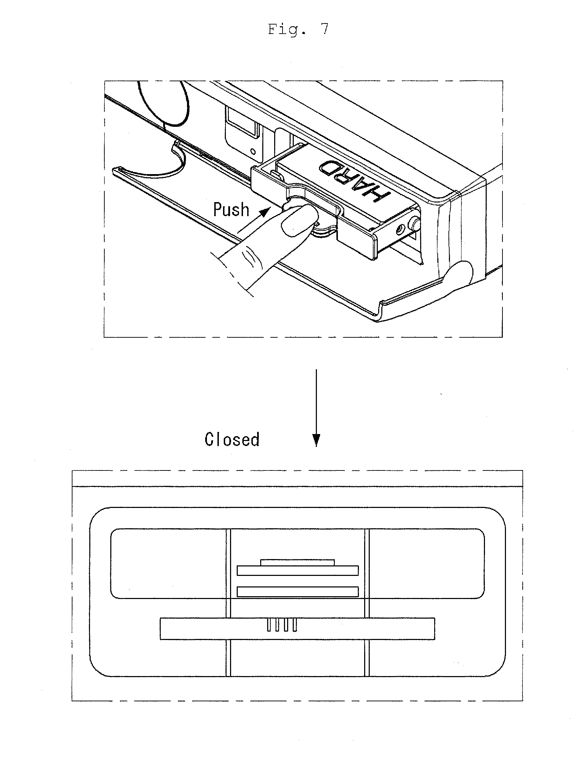

Therefore, the user can, as illustrated in Fig. 7, insert and connect the hard disk bracket inside the body by pushing the first tong and the second tong formed on the bracket, and in this case, as described before, the lock boss 22d formed at the lower portion of the second tong in the shape of a hook and the lock step 25 formed at the front of the body are coupled, thereby enabling the hard disk maintained at the state of firm coupling.

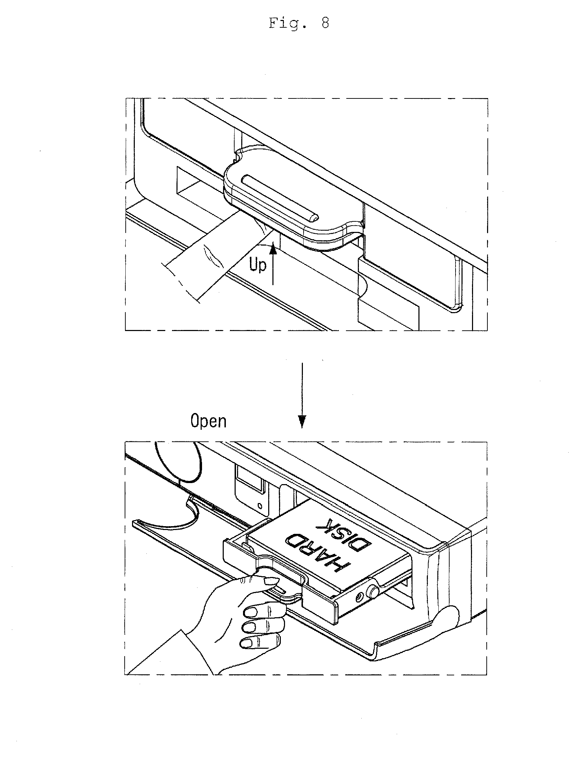

Then, by lifting up the second tong formed at the hard disk bracket or gripping both the first tong and the second tong together, the user can separate the lock boss 22d formed at the lower portion of the second tong and the lock step 25 formed at the front of the body, and easily discharge the hard disk bracket, as illustrated in Fig. 8.

In a modified embodiment of the present invention, only the second tong 22b can be formed at the hard disk bracket 22 instead of forming both the first tong 22a and the second tong 22b, in which case the user can discharge the hard disk bracket 22 from the body by lifting up the second tong 22b. Also, the guide rail 24a, which guides sliding insertion of the hard disk bracket 22, can be formed on the interior chassis of the body without using the cover bracket 24 instead of being formed at the cover bracket 24.

Meanwhile, the first tong and the second tong, which are formed facing vertically in the embodiment of the present invention with one at top and the other at bottom as described above, can also be formed facing horizontally with one at right side and the other at left side in other modified embodiments.

## Claims

1. A device for enabling attaching and detaching of a recording medium, comprising:
a recording medium housing unit for safely housing a recording medium; and
a translating unit for guiding said recording medium housing unit while the recording medium housing unit is inserted into or discharged out of a body of the device;
wherein one or more of tongs are installed on a front of said recording medium housing unit and a locking means is formed on a portion of one of said tongs for coupling with or separating from the body of the device.

2. The device of claim 1, wherein said recording medium housing unit is in a shape of a tray and two or more of tongs are arranged in parallel on the recording medium housing unit with a uniform interval.

3. The device of claim 1 or 2, wherein said recording medium is a hard disk or a solid state disk, and said recording medium housing unit is a disk bracket.

4. The device of claim 3, wherein said translating unit is a cover bracket and the disk bracket is inserted into or discharged out of said cover bracket.

5. The device of claim 1, wherein two tongs are arranged in parallel on a front end of said recording medium housing unit.

6. The device of claim 5, wherein said locking means is formed on one of said two tongs to be coupled with or separated from a lock step formed on a front of the body of the device.

7. The device of claim 6, wherein said locking means is formed on a lower portion of the tong in a shape of a hook.

8. The device of claim 6, wherein said locking means has a vertical cross sectional surface to a direction of a front of said drive bracket and a tilted surface to a rear direction so that the vertical cross sectional surface of the locking means is coupled with said lock step securing said recording medium housing unit when the recording medium housing unit is inserted into the body.

9. The device of claim 5, wherein said tong with the locking means formed on it is fixed on a floor of said recording medium housing unit and the other tong is fixed on the front of said recording medium housing unit, with a length of protrusion of the tong having the locking means longer than a length of protrusion of the other tong.

10. The device of any one of claims 1 to 9, wherein a groove in a shape of a cylinder cut halfway in a direction of an axis is formed at a portion located inner than said locking means and under said tong, and a protruding part is formed with a shape and location matching the shape and location of said groove at a time said locking means and said lock step formed on the body are coupled.

11. The device of any one of claims 1 to 10, wherein said locking means is configured to be coupled with the lock step formed on the body when a user pushes and inserts said recording medium housing unit.

12. The device of any one of claims 1 to 11, wherein said locking means is separated from the lock step formed on the body when a user lifts up the tong or grips the tongs together.

13. The device of any one of claims 1 to 12, wherein guide bosses are formed on right and left sides of said recording medium housing unit and guide rails are formed on right and left inner sides of said translating unit.

14. The device of claim 13, wherein said recording medium housing unit is configured to be inserted into or discharged out of said translating unit through sliding by said guide bosses and guide rails.
